# EUROPÄISCHE PATENTANMELDUNG

(11) **EP 0 546 473 A1**
(43) Veröffentlichungstag der Anmeldung: **16.06.1993**
(21) Anmeldenummer: 92120722.1
(22) Anmeldetag: 04.12.1992
(51) Int. Cl.: C08G 77/60, C08G 77/52

(54) **Verfahren zur Herstellung von Polyarylensiloxanen durch Schmelzkondensation von leichtflüchtigen Silanen mit hochschmelzenden Bisphenolen**

(30) Priorität: 07.12.1991 DE 4140412
(71) Anmelder: HOECHST AKTIENGESELLSCHAFT, D-65926 Frankfurt am Main (DE)
(72) Erfinder: Land, Horst-Tore, Dr., W-6230 Frankfurt/M. 80 (DE)

(57) **Zusammenfassung**

Verfahren zur Herstellung von Polyarylensiloxanen durch Schmelzkondensation, wobei difunktionelle Silane mit einem Siedepunkt ≦ 130°C mit Bisphenolen, welche einen Schmelzpunkt oberhalb 110°C besitzen, in Gegenwart eines Katalysators bei Temperaturen im Bereich von 35 bis 200 °C miteinander umgesetzt werden.

Vorzugsweise werden Bisphenole der Formel II 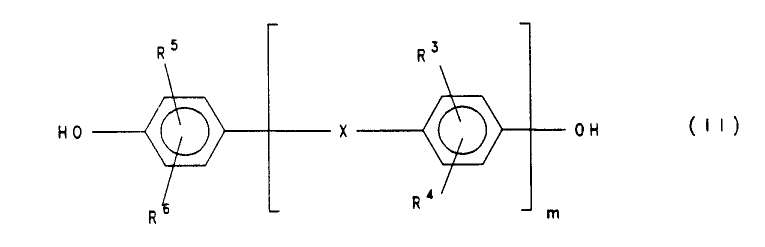
und difunktionelle Silane der Formel (III) 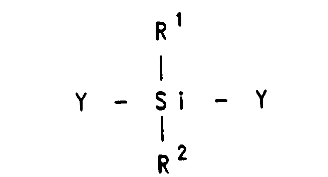
eingesetzt.

Als Katalysatoren werden aromatische aliphatische Aminverbindungen verwendet.

## Beschreibung

Polyarylensiloxane sind Verbindungen, die in einem breiten Einsatzgebiet Anwendung finden. Als Beispiele seien hier die Verwendung für Release-Schichten in Photokopierern (EP-A-030 817), für Photoresistmaterialien (EP-A-398 049) oder für flammwidrige Thermoplaste (EP-A-398 049) genannt. Eine Verwendung von Polyarylensiloxanen als Bestandteil von Pulverlacksystemen wird in der prioritätsälteren nicht vorveröffentlichten DE-A-41 29 000 beschrieben.

Polyarylensiloxane werden durch die Umsetzung von aromatischen Dihydroxyverbindungen mit difunktionellen Silanen gewonnen. Wegen seiner im Vergleich zu anderen Polyarylensiloxanen überragenden hydrolytischen Stabilität ist das Polykondensat aus Bisphenol-A und Dimethyldichlorsilan von besonderem Interesse.

Für die Herstellung dieses Polymeren ist es bisher notwendig gewesen, eine Lösungskondensation durchzuführen (EP-A-398 049). Die besondere Schwierigkeit besteht in der Umsetzung des Feststoffes Bisphenol-A (Fp = 158_{°}C) mit der Flüssigkeit Dimethyldichlorsilan (Kp = 70 °C) unter gleichzeitiger Abspaltung von molaren Mengen Chlorwasserstoff und Aufrechterhaltung der für den Aufbau des Polymeren notwendigen Stöchiometrie. Aus Kostengründen ist es besonders vorteilhaft, von Dimethyldichlorsilan auszugehen.

Die Vermeidung einer Lösungskondensation ist aus ökonomischen Gründen (Vermeidung von Abwässern, keine aufwendige Aufarbeitung) wünschenswert. Bis jetzt ist es lediglich gelungen, schwerflüchtige Silane (Kp > 130°C)mit hochschmelzenden Bisphenolen (Fp > 110_{°}C) über eine Schmelzkondensation umzusetzen (K.D. Steffen; Ang. Makrom. Chem., 24, 1 - 20 (1972)).

Bei der Schmelzkondensation von hochsiedenden Silanen ist jedoch die Abtrennung von Restmonomer von der Polymerschmelze praktisch unmöglich, so daß hier nur die mit umfangreicher Aufarbeitung verbundene Lösungskondensation in Frage kommt.

Eine Schmelzkondensation von leichtflüchtigen Silanen, welche technisch am leichtesten zugänglich und am konstengünstigsten sind, mit den im allgemeinen hochschmelzenden Bisphenolen war bis zum jetzigen Zeitpunkt jedoch nicht möglich.

Die Aufgabe der vorliegenden Erfindung ist es also ein wirtschaftliches Verfahren zur Herstellung von Polyarylensiloxanen bereitzustellen, welches es erlaubt leichtflüchtige Silane mit hochschmelzenden Bisphenolen über eine Schmelzkondensation umzusetzen.

Die vorliegende Erfindung löst diese Aufgabe und betrifft ein Verfahren zur Herstellung von Polyarylensiloxanen durch Schmelzkondensation von difunktionellen Silanen mit einem Siedepunkt ≦ 130°C mit Bisphenolen, welche einen Schmelzpunkt oberhalb 110°C besitzen, in Gegenwart eines Katalysators bei Temperaturen im Bereich von 10 bis 200 °C, vorzugsweise 25 bis 180°C.

Mit Hilfe des erfindungsgemäßen Verfahrens lassen sich beispielsweise Polyarylensiloxane der Formel I herstellen, 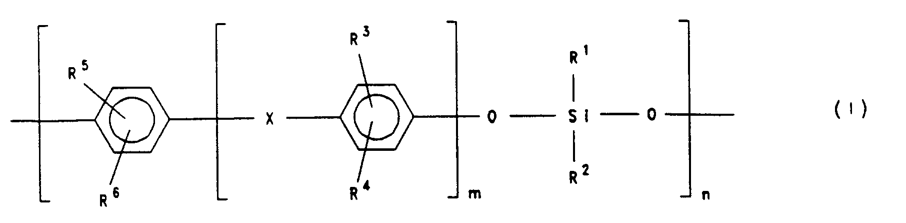
wobei die Symbole R¹⁻, R²⁻, R³⁻, R⁴⁻, R⁵⁻, R⁶⁻, -X-, m und n folgende Bedeutung haben:
R¹⁻ und R²⁻ sind unabhängig voneinander und stehen für einen geradkettigen oder verzweigten C₁-C₁₂-Alkylrest,
R³⁻, R⁴⁻, R⁵⁻ und R⁶⁻ sind gleich oder verschieden und stehen unabhängig voneinander für Wasserstoff, einen verzweigten oder unverzweigten Cₗ-C₃-Alkylrest oder einen substituierten oder unsubstituierten C₆-G₁₄-Arylrest.

-X- steht für eine Gruppe -C(CH₃)₂-, -C(CF₃)₂-, -S-, -S0₂-, -CH₂- oder eine Gruppe 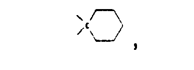
welche gegebenenfalls substituiert, vorzugsweise alkylsubstituiert sein kann, oder für eine Bindung m ist 0 oder 1
und der Polymerisationsgrad n liegt im Bereich von 2 bis 500, insbesondere im Bereich von 3 bis 200.

Zur Herstellung von Polyarylensiloxanen der Formel 1 nach dem erfindungsgemäßen Verfahren sind folgende Verbindungen geeignet:
A) Bisphenole der Formel II 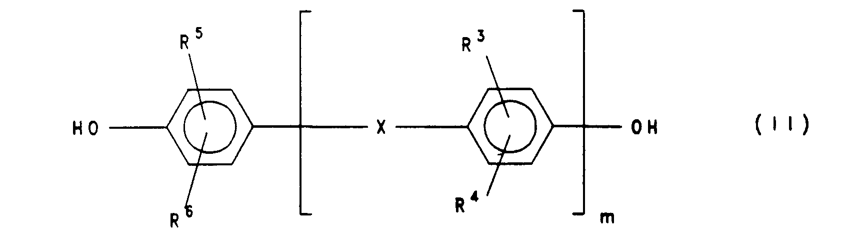
   wobei die Symbole R³⁻, R⁴⁻, R⁵⁻, R⁶⁻, m und -X- die obengenannte Bedeutung haben,
   vorzugsweise R³⁻, R⁴⁻, R⁵⁻ und R⁶⁻ jedoch für Wasserstoff, für einen Methylrest oder einen Phenylrest stehen und
   -X- vorzugsweise eine Gruppe -C(CH₃)₂-, -C(CF₃)₂- oder 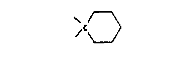
      (gegebenenfalls substituiert) ist; derartige Verbindungen sind beispielsweise Bisphenol-A Hexafluorbisphenol-A 4,4'-Dihydroxydiphenylsulfid, 1,1'-(4-Hydroxyphenyl)cyclohexyl
B) difunktionelle Silane der Formel III 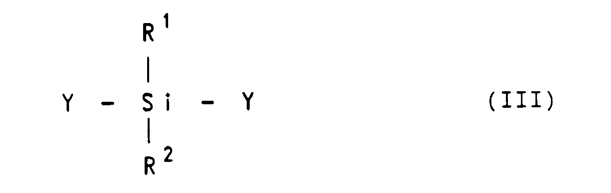
   wobei R¹⁻ und R²⁻ die obengenannte Bedeutung haben, vorzugsweise aber für einen Methyl- oder Ethylrest stehen und
   Y- für Chlor oder Wasserstoff steht;
   beispielsweise
   Dimethyldichlorsilan,
   Diethyldichlorsilan,
   Ethylmethyldichlorsilan,
   1,1,1-Trifluorpropylmethyldichlorsilan und
   Diethylsilan.

Die Schmelzkondensation von Bisphenolen der Formel II und Silanen der Formel III erfolgt in Gegenwart eines Katalysators. Als Katalysatoren eignen sich allgemein Lewis-Basen, beispielsweise Alkoholate, und aliphatische aromatische Aminverbindungen, vorzugsweise werden als Katalysatoren Pyridin, Acridin, Tributylamin, Tetraammoniumbromid und/oder 2,6-Dimethylpyridin eingesetzt. Der Katalysator wird hierbei dem Reaktionsgemisch in Mengen von 0,01 Gew.-% bis 5 Die Polykondensationstemperaturen liegen vorzugsweise im Bereich von 25°C bis 180_{°}C. Die Polykondensationsreaktion wird vorzugsweise so ausgeführt, daß das Verhältnis von Bisphenol zu Silan 0,8:1,2 bis 1,2:0,8 , vorzugsweise 1:1 beträgt.

Mit Hilfe des erfindungsgemäßen Verfahrens lassen sich abhängig von der Art der eingesetzten Bisphenole bzw. Silane, Polyarylensiloxane mit einem Molekulargewicht Mₙ (Zahlenmittel) von 500 bis 80 000, vorzugsweise 600 bis 5 000, bzw. M_{w} (Gewichtsmittel) von 2 000 bis 150 000, vorzugsweise 2 000 bis 15 000, herstellen.

Die Schmelzviskositäten liegen bei den mit Hilfe des erfindungsgemäßen Verfahrens hergestellten Polyarylensiloxanen im Bereich von 0,5 bis 10 Pas (gemessen bei 120°C), insbesondere im Bereich von 1 bis 4 Pas.

Die nach dem erfindungsgemäßen Verfahren hergestellten Polyarylensiloxane eignen sich - außer für die dem Fachmann bekannten, bereits erwähnten Standardanwendungen - als Bestandteil von Pulverlackmischungen sowie als Extrusionshilfsmittel.

Der Vorteil des erfindungsgemäßen Verfahrens liegt insbesondere darin, daß es ermöglicht, leicht flüchtige Silane, welche technisch leicht zugänglich und kostengünstig sind, mit hochschmelzenden Bisphenolen in einem Schmelzkondensationsverfahren umzusetzen. Da es sich bei dem Verfahren um eine Schmelzkondensation handelt, ist eine Verwendung weiterer Hilfsstoffe außer des Katalysators nicht notwendig. Dies vereinfacht die Reaktionsführung und minimiert die entstehende Abfallmenge. Die über die Schmelzkondensation erhaltenen Produkte bedürfen keiner weiteren Aufarbeitung und werden in hoher Reinheit erhalten. Restmonomergehalte an Silan sind vom Polymer durch Erhitzen der Schmelze auf 180°C leicht abtrennbar.

### Beispiele

### Beispiel 1

In einem 2,5 1 Dreihalskolben werden unter Inertgas 228,00 g (= 1,0 mol) Bisphenol-A vorgelegt und mit 193,49 g (= 1,50 mol) Dimethyldichlorsilan versetzt. Die entstehende Suspension ist rührfähig. Unter intensivem Rühren werden 3,0 g Pyridin zugegeben. Anschließend wird das Gemisch auf 50°C erhitzt. Während des Erwärmens wird kontinuierlich Chlorwasserstoff entwickelt, der aus dem Reaktionsgemisch entweicht. Nach einer Reaktionszeit von 120 Min ist eine klare Lösung entstanden. Durch Erhöhung der Temperatur auf 120_{°}C wird das überschüssige Silan abdestilliert. Es entsteht eine klar, niederviskose Schmelze. Dieser Schmelze wird bei 180°C portionsweise insgesamt 103,0 g (= 0,45 mol) Bisphenol-A zugesetzt. Das dann vorliegende Reaktionsgemisch wird abschließend im Vakuum von Chlorwasserstoffresten befreit. Die Isolierung des Produktes erfolgt durch Ablassen der Schmelze in ein Auffanggefäß. Von besonderem Vorteil ist hierbei die niedrige Viskosität der Schmelze (180°C; 0,3 Pas), die ein schnelles Entleeren des Reaktionsgefäßes erlaubt.

Glastemperatur Tg = 46°C, Mₙ = 4300; M_{w} = 12600; Schmelzviskosität (120°C) = 3,1 Pas.

### Beispiel 2

In einem 2,5 1 Dreihalskolben werden unter Inertgas 228,00 g (= 1,0 mol) Bisphenol-A vorgelegt und mit 93,49 g (1,50 mol) Dimethyldichlorsilan versetzt. Die entstehende Suspension wird unter intensivem Rühren mit 3,0 g Pyridin versetzt und anschließend auf 50°C erhitzt. Während des Erwärmens wird kontinuierlich Chlorwasserstoff entwickelt, der aus dem Reaktionsgemisch entweicht. Nach einer Reaktionszeit von 120 Min ist eine klare Lösung entstanden. Durch Erhöhung der Temperatur auf 120°C wird das überschüssige Silan abdestilliert. Es entsteht eine klare, niederviskose Schmelze. Dieser Schmelze wird bei 180°C portionsweise insgesamt 98,4 g (= 0,43 mol) Bisphenol-A und 3,0 g (= 0,02 mol) 4-tert.-Butylphenol zugesetzt. Das dann vorliegende Reaktionsgemisch wird abschließend durch Anlegen von Vakuum von Chlorwasserstoffresten befreit. Die Isolierung des Polymeren erfolgt durch Ablassen der Schmelze in ein Auffanggefäß.

Glastemperatur Tg = 53 ° C; Mₙ = 37500; M_{w} = 84600.

## Patentansprüche

1. Verfahren zur Herstellung von Polyarylensiloxanen durch Schmelzkondensation, dadurch gekennzeichnet, daß difunktionelle Silane mit einem Siedepunkt ≦ 130°C mit Bisphenolen, welche einen Schmelzpunkt oberhalb 110°C besitzen, in Gegenwart eines Katalysators bei Temperaturen im Bereich von 35 bis 200 °C miteinander umgesetzt werden.

2. Verfahren nach Anspruch 1, dadurch gekennzeichnet, daß Bisphenole der Formel II eingesetzt werden 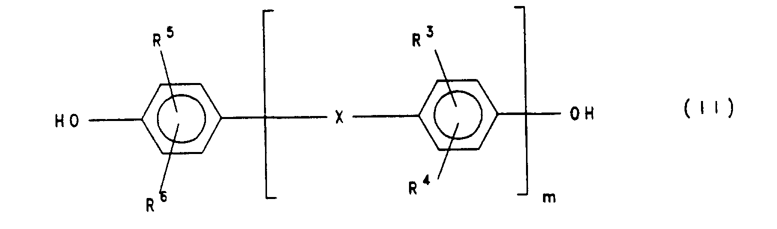
wobei die Symbole R³⁻, R⁴⁻, R⁵⁻, R⁶⁻, m und -X- folgende Bedeutung haben: R³⁻, R⁴⁻, R⁵⁻ und R⁶⁻ sind gleich oder verschieden und stehen unabhängig voneinander für Wasserstoff, einen verzweigten oder unverzweigten C₁-C₃-Alkylrest oder einen substituierten oder unsubstituierten C6-C14-Arylrest; -X- steht für eine Gruppe -C(CH₃)₂-, -C(CF₃)₂-, -S-, -S0₂-, -CH₂- oder eine Gruppe 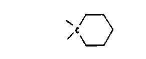
(gegebenenfalls substituiert) oder für eine Bindung und m ist Null oder 1.

3. Verfahren nach Anspruch 1, dadurch gekennzeichnet, daß difunktionelle Silane der Formel III eingesetzt werden 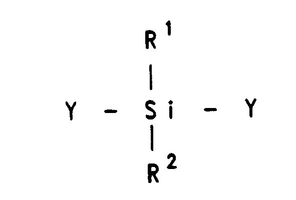
wobei R¹⁻ und R²⁻ gleich oder verschieden sind und unabhängig voneinander für einen geradkettigen oder verzweigten C₁-C₁₂-Alkylrest stehen und Y- für Chlor oder Wasserstoff steht.

4. Verfahren nach Anspruch 1, dadurch gekennzeichnet, daß als Katalysatoren aromatische aliphatische Aminverbindungen eingesetzt werden.

5. Verfahren nach Anspruch 4, dadurch gekennzeichnet, daß als Katalysatoren Pyridin, Tributylamin, Tetraammoniumbromid, Acridin und/oder 2,6-Dimethylpyridin eingesetzt werden.

6. Verfahren nach Anspruch 1, dadurch gekennzeichnet, daß der Katalysator in Mengen von 0,01 Gew.-% bis 5 Gew.-% zugesetzt wird.
